# EUROPÄISCHE PATENTSCHRIFT

(11) **EP 2 956 920 B1**
(45) Veröffentlichungstag und Bekanntmachung des Hinweises auf die Patenterteilung: **03.10.2018**
(21) Anmeldenummer: 14706258.2
(22) Anmeldetag: 07.01.2014
(51) Int. Cl.: G09B 21/00, A61H 3/06

(54) **ORIENTIERUNGSHILFE FÜR BLINDE UND SEHBEHINDERTE MIT EINER VORRICHTUNG ZUR DETEKTIERUNG EINER UMGEBUNG**
ORIENTATION AID FOR THE BLIND AND VISUALLY IMPAIRED COMPRISING A DEVICE FOR DETECTING SURROUNDINGS
DISPOSITIF POUR DÉTECTER UN ENVIRONNEMENT

(30) Priorität: 08.01.2013 AT 162013; 25.11.2013 AT 507772013; 02.12.2013 AT 507882013
(43) Veröffentlichungstag der Anmeldung: 23.12.2015
(73) Patentinhaber: Tec-Innovation GmbH, 2123 Hautzendorf (AT)
(72) Erfinder: RAFFER, Markus, 8010 Graz (AT); PAJESTKA, Kevin, 2123 Hautzendorf (AT)
(74) Vertreter: Patentanwaltskanzlei Matschnig & Forsthuber OG
(86) Internationale Anmeldenummer: PCT/AT2014/050003
(87) Internationale Veröffentlichungsnummer: WO 2014/107754

(56) Entgegenhaltungen:
- DE-A1- 10 334 009
- KR-A- 20100 127 007
- US-A1- 2006 129 308
- US-B1- 7 706 212
- Ulrich Iwan: "The GuideCane-A Computerized Travel Aidfor the Active Guidanceof Blind Pedestrians", , August 1997 (1997-08), XP55122150, Gefunden im Internet: URL:http://www.valentiniweb.com/piermo/rob otica/doc/Borenstein/Iwan_Thesis.PDF [gefunden am 2014-06-06]

## Beschreibung

Die Erfindung betrifft eine Vorrichtung zur Detektierung einer Umgebung, wobei die Vorrichtung umfasst:
- zumindest eine Sensoreinheit, sowie
- zumindest eine Auswerteeinheit,
wobei die Sensoreinheit zumindest einen Abstandssensor umfasst und die Auswerteeinheit anhand der mit dem zumindest einen Abstandssensor ermittelten Abstandsdaten zumindest ein virtuelles Bild der von dem zumindest einen Abstandssensor erfassten Umgebung erzeugt.

Sehbehinderte Personen orientieren sich im Allgemeinen mit Hilfe eines Taststockes und der haptischen Wahrnehmung der Kollisionen der Stockspitze mit der Umgebung. Dazu sind aus der Literatur Leitsysteme bekannt, die durch eine periodische Anordnung von z.B. Fußbodenelementen Blinde in Bahnhöfen, auf Bahnsteigen o.ä. sehr geeignet zu führen im Stande sind. Wenig geeignet sind diese Methoden für wenig Geübte und motorisch eingeschränkte Menschen bzw. in natürlicher, insbesondere ländlicher Umgebung. Zusätzlich wird die Interaktion mit der Umwelt durch die Verwendung eines Taststockes beeinträchtigt.

Weiters sind Einsatzkräfte von Organisationen wie Feuerwehr, Militär, etc. häufig mit Situationen konfrontiert, in welchen eine optische Orientierung schwierig ist, etwa bei Nacht oder in stark verrauchten Gebäuden, etc.

Die räumliche Abtastung der Umgebung obliegt bei den bekannten Vorrichtungen dem Benutzer. Ist dieser zusätzlich in seiner Bewegungsfähigkeit eingeschränkt, so ergeben sich erhebliche Gefahrenquellen, die immer wieder Unfälle mit Personenschäden zur Folge haben. Außerdem kann die Abtastung der Umgebung mit dem Taststock nur sequentiell erfolgen, was gerade bei veränderlicher Umgebung, also schon bei einer Rolltreppe, zu kritischen Situationen führen kann. Zudem werden beispielsweise Kanten von Teppichen oder vergleichbar niedrige, aber relevante Hindernisse oft nicht erkannt.

Die Schrift *"*The GuideCane - A Computerized Travel Aidfor the Active Guidance of Blind Pedestrians", Ulrich Iwan, August 1997 offenbart eine Vorrichtung zur Detektierung einer Umgebung, wobei die Vorrichtung eine Sensoreinheit sowie eine Auswerteeinheit umfasst, wobei die Sensoreinheit einen Abstandssensor und einen Lagesensor, durch den die räumliche Orientierung in der Ebene gemessen wird, umfasst, und wobei die von dem Abstandssensor ermittelten Abstandsdaten gemeinsam mit den zugehörigen Lagedaten erfasst werden und die Auswerteeinheit anhand der Abstandsdaten, gegebenenfalls unter Berücksichtigung der Lagedaten, zumindest ein virtuelles Bild der von dem Abstandssensor erfassten Umgebung erzeugt.

Die US 2006/0129308 A1 offenbart eine computergestütztes Navigations- und Kommunikationssystem, dass mittels eines Computers oder anderen Prozessoren in einer kabellosen Verbindung mit RFID-Tags, um eine blinde Person zu unterstützen. Hierbei wird die Vorrichtung so betrieben, dass von einem Abstandssensor Abstandsdaten nur erfasst werden, wenn ein Lagesensor eine zulässige Lage des Abstandssensors erfasst, oder Abstandsdaten des Abstandssensors nur an eine Auswerteeinheit übermittelt werden, wenn der Lagesensor eine zulässige Lage des Abstandssensors bzw. Sensoreinheit erfasst.

Es ist eine Aufgabe der Erfindung, eine dynamische Erfassung der Umgebung bzw. von Umgebungssituationen zuverlässig zu erfassen.

Insbesondere ist es eine Aufgabe der Erfindung, eine solche Erfassung für eingeschränkte Personen wie oben beschrieben, d.h. für Personen, die in ihrer Wahrnehmung an sich und/oder durch die Umgebungsbedingungen eingeschränkt sind, zu ermöglichen.

Diese Aufgabe wird durch eine eingangs genannte Vorrichtung dadurch gelöst, dass
die Sensoreinheit weiters zumindest einen Lagesensor umfasst, mittels welchem Lagesensor die räumliche Lage, d.h. zumindest die Neigung der zumindest einen Sensoreinheit bzw. des zumindest einen Abstandssensors zu einer Horizontalen bzw. Horizontalebene, ermittelbar ist, wobei sich definierte Lagen in einem Winkelbereich um die 0° Lage in Bezug auf eine Horizontale bzw. Horizontalebene befinden, beispielsweise einem Bereich von +/- 30° um die 0° Lage herum, und wobei
o von dem zumindest einen Abstandssensor Abstandsdaten nur erfasst werden, wenn der zumindest eine Lagesensor eine der definierten Lagen des zumindest einen Abstandssensors erfasst, oder
o Abstandsdaten des zumindest einen Abstandssensors nur an die zumindest eine Auswerteeinheit übermittelt werden, wenn der zumindest eine Lagesensor eine definierte Lage des zumindest einen Abstandssensors bzw. der Sensoreinheit erfasst,
und die Auswerteeinheit zumindest ein virtuelles Bild der von dem zumindest einen Abstandssensor erfassten Umgebung anhand der Abstandsdaten, welche in einer definierten Lage des Abstandssensor bzw. der Sensoreinheit erfasst wurden, erzeugt.

Unter einem virtuellen Bild ist eine Darstellung der von der erfindungsgemäßen Vorrichtung detektierten Umgebung auf eine Art und Weise, welche es dem Benutzer der Vorrichtung ermöglicht, trotz beeinträchtigter Sicht und/oder anderer Einschränkungen, sich ein "Bild" von seiner Umgebung vorstellen zu können. Dieses "virtuelle" Bild kann auf geeignete Weise von der Vorrichtung in eine für den Benutzer wahrnehmbare Form gebracht werden, wie dies im Folgenden noch ausführlich beschrieben ist, sodass es dem Benutzer möglich wird, sich über das entsprechend auf geeignete Art und Weise "abgebildete" virtuelle Bild ein tatsächliches Abbild der Umgebung zu schaffen.

Zur Erzeugung eines virtuellen Bildes, bei dem es sich bei einem bewegten Benutzer und/oder einer bewegten Vorrichtung naturgemäß um ein dynamisches Bild handelt, das sich permanent ändert, wird die Umgebung mit einem oder mehreren Abstandssensoren abgetastet, weiters wird mit einem oder mehreren Lagesensoren die jeweilige Lage der Abstandssensoren ermittelt und es erfolgt auf die oben beschriebenen Arten und Weisen eine Verknüpfung der Abstandssensorik und der Lagesensorik, sodass auf besonders zuverlässige Weise ein virtuelles Bild bzw. permanent, in definierten Zeitintervallen, virtuelle Bilder der Umgebung erzeugt werden können.

Unter der Erzeugung "eines virtuellen Bildes" ist damit nicht zu verstehen, dass lediglich ein virtuelles Bild erzeugt wird, sondern, dass zu einem definierten Zeitpunkt ein virtuelles Bild erzeugt wird, sowie - bei aktivierter Vorrichtung - laufend, z.B. in konstanten Zeitschritten, dieses virtuelle Bild neu ermittelt wird, sodass bei sich ändernder Umgebung, sei dies dadurch, dass sich die Umgebung selbst ändert und/oder sich die Vorrichtung bewegt, entsprechend auch das virtuelle Bild dynamisch ändert.

Durch die Verknüpfung des oder der Abstandssensoren mit dem oder den Lagesensoren wird es möglich, beispielsweise unzulässige Lagen des zumindest einen Abstandssensors nicht in die Ermittlung des (bzw. der) virtuellen Bildes/Bilder einfließen zu lassen oder die jeweilige Lage des zumindest einen Abstandssensors/die Sensoreinheit zum Zeitpunkt der Abstandsmessung bei der Ermittlung des virtuellen Bildes mit zu berücksichtigen.

Grundsätzlich kann vorgesehen sein, dass die Abstandsdaten und/oder Lagedaten und/oder Beschleunigungsdaten gemeinsam erfasst und in der Vorrichtung gemeinsam verarbeitet werden.

Bei einer konkreten Ausführungsform der Erfindung liefert der zumindest eine Abstandssensor nur dann Abstandsdaten oder die gemessenen Abstandsdaten werden nur dann von der Auswerteeinheit berücksichtigt, wenn der zumindest eine Abstandssensor sich in einer definierten Lage, insbesondere in einer definierten Lage in Bezug auf eine Horizontalebene befindet. Es existieren ein oder in der Regel mehrere oder viele solche definierten Lagen, in welchen die Abstandsdaten berücksichtigt werden können oder ermittelt werden.

Befindet sich der zumindest eine Abstandssensor zu einem Zeitpunkt in einer solchen definierten Lage, ist der zumindest eine Abstandssensor zu diesem Zeitpunkt aktiv und misst, oder im Falle eines Sensors, der permanent aktiv ist, werden seine Daten nur zu solchen Zeitpunkten, in welchen sich der zumindest eine Abstandssensor in einer definierten Lage befindet, berücksichtigt. Befindet sich der zumindest eine Abstandssensor nicht in einer der definierten Lagen, so misst er nicht oder seine Messung wird nicht berücksichtigt.

Beispielsweise ist dies von Vorteil, wenn der zumindest eine Abstandssensor in einen Schuh eines Benutzers eingebaut ist.

Bei bestimmten Anwendungen wie etwa bei einem Einbau der Abstandssensoren in einen Schuh kann es zu Fehlmessungen des zumindest einen Abstandssensors kommen, wenn dieser sich nicht in einer waagechten Lage befindet. Ist der zumindest eine Abstandssensor beispielsweise nach unten gerichtet, so detektiert dieser zumindest einen Teil des Weges und nicht ausschließlich Gegenstände und Hindernisse, die sich vor dem Benutzer befinden. Ebenso kann es vorkommen, dass bei nach oben gerichtetem Abstandssensor bestimmte Hindernisse, etwas niedrige Hindernisse in gewisser Entfernung nicht oder nicht zuverlässig erfasst werden. Durch Verwendung lediglich von Messungen des zumindest einen Abstandssensors in waagrechter Lage kann dieses Problem zuverlässig gelöst werden.

Bei der oben erwähnten definierten Lage handelt es sich daher beispielsweise bei einem Schuh, in welche die Vorrichtung bzw. zumindest Teile davon eingebaut sind, um die 0° Lage in Bezug auf die Waagrechte. Allerdings ist die "definierte Lage" in der Regel nicht ausschließlich durch genau einen Winkelwert gegeben. Um bei dem Beispiel des Schuhs zu bleiben, können die definierten Lagen auch in einem Winkelbereich liegen, innerhalb welchem die Abstandsdaten gemessen oder berücksichtigt werden. So kann es bei dem Schuh beispielsweise auch vorteilhaft sein, wenn zusätzlich unter einem negativ Winkel, also nach unten ebenso Abstandsmessungen berücksichtigt werden. Typischer Werte für den Winkel liegen hier zwischen 0° bis -30°. Auf diese Weise kann ein bevorstehendes Gefälle (Stiegen, etc.) erkannt werden.

Oder es ist vorgesehen, dass zusätzlich unter einem positiven Winkel, also nach oben Abstandsmessungen berücksichtigt werden. Typische Werte für den Winkel liegen hier zwischen 0° bis +30°. Auf diese Weise kann eine bevorstehende Steigung (Stiegen, etc.) erkannt werden. Auf diese Weise können aber auch Gegenstände und Hindernisse, die sich z.B. nicht oder nicht nur in Bodennähe befinden, sondern auch höher liegende Gegenstände, etc., wie etwa Postkästen in Brusthöhe detektiert werden

Besonders vorteilhaft ist es, wenn um eine besonders ausgezeichnete Lage herum in beiden Richtungen, also Neigungen des zumindest einen Abstandssensors Abstandsmessungen berücksichtigt werden und vorzugsweise die Neigung des zumindest einen Abstandssensors bei der Ermittlung des einen bzw. der mehreren virtuellen Bilder berücksichtigt wird.

Allgemein, und insbesondere für die bereits beschriebene Anwendung der Vorrichtung in Zusammenhang mit einem Schuh hat sich dabei eine besonders bevorzugte definierte Lage von +/- 30° um die 0° Lage herum, insbesondere eine definierte Lage von +/- 20° um die 0° Lage herum erwiesen. Befindet sich der zumindest eine Abstandssensor also in einer Neigungslage von +/- 30° bzw. +/- 20° zur Waagrechten, so werden die mit dem zumindest einen Abstandssensor ermittelten Abstände zu von dem zumindest einen Abstandssensor erfassten Gegenständen, Hindernissen, etc. berücksichtigt und der jeweils gemessene Neigungswinkel fließt vorzugsweise in die Ermittlung des zumindest einen, vorzugsweise der mehreren virtuellen Bilder mit ein.

Bei anderen Anwendungen können aber durchaus auch andere Lagen der Abstandssensoren zu sinnvollen Ergebnissen führen, etwa bei Anwendungen in der Industrie kann auch eine 360° Messung sinnvoll sein.

Je nach Anwendung weist die erfindungsgemäße Vorrichtung daher den entsprechenden, vorteilhaften Erfassungsbereich auf oder ist vorzugsweise programmier- und somit einstellbar.

Besonders bevorzugt ist es, wenn die zumindest eine Sensoreinheit zwei oder mehr Abstandssensoren umfasst, welche vorzugsweise in einem Array angeordnet sind. Durch die Verwendung von mehreren Abstandssensoren, die vorzugsweise in einem definierten Bereich (Array) angeordnet sind, kann der Erfassungsbereich der Umgebung und/oder die Genauigkeit der Abstandsmessung und somit der Ermittlung der virtuellen Umgebung verbessert werden.

Das oder die virtuellen Bilder liegen in erster Linie in der Vorrichtung, insbesondere in der Auswerteeinheit vor. Es handelt sich dabei beispielsweise um Daten, welche Abstände zu oder die Lage von Gegenständen, Hindernisse, gegebenenfalls auch deren Form in einer abstrakten Form beschreiben.

Um es nun einem Benutzer der Vorrichtung möglich zu machen, sich in dieser virtuellen Umgebung real zu orientieren, ist vorzugsweise vorgesehen, dass die Vorrichtung weiters zumindest eine Feedback-Einheit umfasst, welche in Abhängigkeit von dem von der Auswerteeinheit ermittelten, zumindest einen virtuellen Bild der Umgebung zumindest ein Feedback-Signal ausgibt.

Diese Feedback-Einheit kann z.B. eine eigene Baueinheit bzw. Baugruppe sein, oder sie ist in die Auswerteeinheit integriert bzw. übernimmt die Auswerteeinheit zusätzlich die Funktion der Feedback-Einheit.

Über die Feedback-Einheit und die für den Benutzer wahrnehmbaren Feedback-Signale kann eine der Umgebung entsprechende, für den Benutzer wahrnehmbare Darstellung der Umgebung geschaffen werden, die sich entsprechend z.B. bei einer Bewegung des Benutzers verändert, was durch sich ändernde Feedback-Signale dargestellt wird.

Bei einer oder mehreren konkreten Ausführungsformen der Erfindung ist vorgesehen, dass es sich bei dem zumindest einen Feedback-Signal um eines oder mehrere der folgenden Feedback-Signale handelt:
- akustisches Feedback-Signal;
- visuelles Feedback-Signal;
- haptisches Feedback-Signal;
- neurostimulierendes Feedback (z.B. beim Einbau in Prothesen, Orthesen, etc.);
- elektrische Stromimpulse.

Beispielsweise wird ein haptisches Feedback-Signal als Vibrationssignal bzw. als Vibration ausgegeben, oder als spürbarer elektrischer Stromimpulse bzw. spürbare Stromimpulse. Über z.B. die Stärke des Signals kann die Entfernung zu einem Hindernis etc. abgebildet werden, durch die Position des Signals (z.B. links am Körper, rechts am Körper des Benutzers kann die Position des Hindernisses etc. gezeigt werden).

Beispielsweise wird ein Feedback-Signal, beispielsweise ein akustisches Feedback-Signal als Mono-, Stereo- oder 3-D-Signal ausgegeben.

Ein solches Signal, insbesondere ein Stereo- oder 3-D (Surround) Signal kann entsprechend adaptiert werden, um z.B. besonders gut auf räumliche Hindernisse hinzuweisen.

Die Ausgabe von Stereo-Signalen ist dabei nicht auf akustische Signale beschränkt, auch ein z.B. haptisches Signal kann als "Stereo" Signal ausgegeben werden, indem je nach Hindernis das Signal z.B. linksseitig oder rechtsseitig oder auf einer dieser beiden Seite verstärkt ausgegeben wird.

Besonders bevorzugt ist es, wenn das Feedback-Signal hinsichtlich einer oder mehrerer der folgenden Größe zeitlich variiert oder sich zeitlich verschiedene Feedback-Signale in einer oder mehreren der folgenden Größen unterscheiden: Frequenz des Feedback-Signals, Amplitude des Feedback-Signals, Reinheit (Rauschen) des Feedback-Signal, Dauer des Feedback-Signals, Stärke des Feedback-Signals, Lautstärke des Feedback-Signals, Helligkeit des Feedback-Signals.

Alternativ oder vorzugsweise zusätzlich kann vorgesehen sein, dass das Feedback-Signal abhängig von der Distanz eines Hindernisses zu dem zumindest einen Abstandssensor, und/oder der Form, z.B. der Höhe, Tiefe, oder Breite eines Hindernisses, abhängt.

Bei einer konkreten vorteilhaften Ausführungsform der erfindungsgemäßen Vorrichtung ist vorgesehen, dass die zumindest eine Sensoreinheit in einem Schuh integriert ist. Der Einbau in einen Schuh ermöglicht es einem Träger des Schuhs auf einfache und gut zu tragende Art und Weise sich mit einer erfindungsgemäßen Vorrichtung in einer Umgebung zu orientieren. Dabei ist vorzugsweise lediglich die Sensoreinheit in dem Schuh eingebaut, d.h. entweder fix verbaut oder herausnehmbar verbaut, und der Rest der Vorrichtung befindet sich z.B. am Körper des Benutzers, beispielsweise werden Auswerteeinheit und Feedback-Einheit vorzugsweise am Körper des Trägers des Schuhs getragen. Es kann aber auch vorgesehen sein, dass die gesamte Vorrichtung im Schuh angeordnet ist.

Günstig kann es auch sein, wenn das Feedback-Signal in Abhängigkeit von der ermittelten Beschleunigung variiert wird, sodass z.B. bei geringen Beschleunigungen ein Signal mit z.B. geringerer Frequenz erzeugt wird, das "ruhiger" auf den Benutzer wirkt etc.

Bevorzugt ist dabei, dass die Sensoreinheit in einem vorderen Bereich des Schuhs eingebaut ist.

Ebenso ist es zweckmäßig, wenn der zumindest eine Beschleunigungssensor in den Schuh integriert ist.

Bei einer anderen Vorrichtung der Erfindung ist vorgesehen, dass zumindest ein Teil der Vorrichtung, vorzugsweise die gesamte Vorrichtung, in einen Stock, beispielsweise in einen Taststock, Gehstock, Blindenstock, oder in einen Teil eines solchen Stockes eingebaut ist.

Ebenso kann vorgesehen sein, dass zumindest ein Teil der Vorrichtung oder die gesamte Vorrichtung in eine Kopfbedeckung, z.B. einen Helm, Kleidungsstücke, wie z.B. Brillen, Gürtel, etc., einer Prothese oder an einem Mobiltelefon anbringbar oder eingebaut ist.

Die Vorrichtung kann auch im Zusammenhang mit Produktionsschienen (Laufband, etc.) bzw. Maschinen und/oder Robotern, z.B. in der Automobiltechnik zum Einsatz kommen.

Beispielsweise ist vorgesehen, dass der zumindest eine Abstandssensor mittels Schallwellen arbeitet, z.B. ein Ultraschallsensor ist.

Alternativ oder zusätzlich kann vorgesehen sein, dass der zumindest eine Abstandssensor mittels elektro- und/oder magnetischer Wellen, insbesondere elektromagnetischer Wellen arbeitet, z.B. ein Radarsensor ist oder Funkwellen verwendet, insbesondere Funkwellen ab 1 MHz.

Alternativ oder zusätzlich kann vorgesehen sein, dass der zumindest eine Abstandssensor ein optischer Sensor ist, der z.B. im nicht sichtbaren Bereich des Wellenlängenspektrums oder im sichtbaren Bereich des Wellenlängenspektrums arbeitet.

Die Erfindung betrifft weiters einen Schuh mit einer oben genannten Vorrichtung, welche in den Schuh eingebaut ist, bzw. sind lediglich Teile der Vorrichtung in dem Schuh angeordnet bzw. in diesen eingebaut. Zumindest eine Sensoreinheit mit dem oder den Abstandssensoren und zumindest einem Lagesensor sind dabei in dem Schuh angeordnet, alle anderen Bestandteile der Vorrichtung können ebenfalls in dem Schuh angeordnet sein, sind aber vorzugsweise auf Grund des Bauraumes außerhalb des Schuhs angeordnet. Die Feedback-Einheit ist vorzugsweise immer außerhalb des Schuhs angeordnet.

Außerdem betrifft die Erfindung einen Stock, insbesondere einen Gehstock oder Taststock, mit einer oben beschriebenen Vorrichtung, welche in dem Stock angeordnet ist. Wie im Falle eines Schuhs ist hier wiederum auf jeden Fall die Sensoreinheit in dem Stock eingebaut, bei einem Stock bietet es sich an, vorzugsweise die gesamte Vorrichtung in diesen einzubauen.

Weiters betrifft die Erfindung noch einen Griff für einen Stock, insbesondere für einen Gehstock oder Taststock, mit einer oben beschriebenen Vorrichtung bzw. Teilen, insbesondere einer Sensoreinheit einer oben beschriebenen Vorrichtung.

Im Folgenden ist die Erfindung an Hand der Zeichnung näher erörtert. In dieser zeigt
- Fig. 1: einen erfindungsgemäßen Schuh mit erfindungsgemäßer Vorrichtung,
- Fig. 2: den Verlauf des Richtungsvektors beim Gehen mit einem Schuh,
- Fig. 3: einen Stock mit eingebauter erfindungsgemäßer Vorrichtung, und
- Fig. 4: ein Beispiel für ein akustisches Feedback-Signal.

Die Figuren zeigen zwei beispielhafte Ausführungsformen, bei welcher die Vorrichtung als Vorrichtung zur Warnung von Personen, insbesondere behinderten Personen vor Hindernissen verwendet wird. Insbesondere sind solche gezeigten Vorrichtungen besonders für sehbehinderte Personen geeignet. Eine solche Vorrichtung ermöglicht eine bessere Orientierung und schützt vor Unfällen.

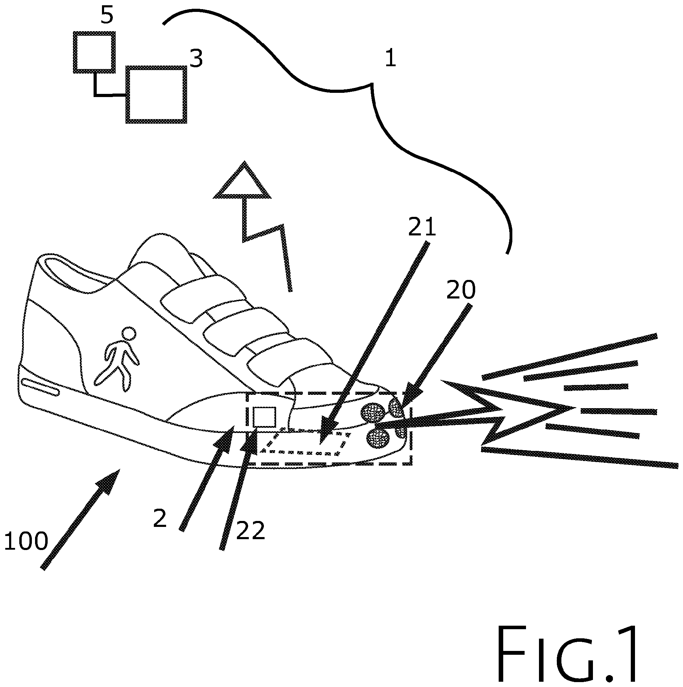

Figur 1 zeigt einen Schuh 100, in dem Teile einer erfindungsgemäßen Vorrichtung 1 eingebaut sind. Konkret befindet sich in dem Schuh eine Sensoreinheit 2, welche einen Array aus Abstandssensoren 20 aufweist sowie einen Lagesensor 21, mit dem die Lage der Abstandssensoren 20, insbesondere deren Neigung zu einer Horizontalebene ermittelt werden können. Vorzugsweise liegen die Abstandssensoren in einer Horizontalebene, wenn der Schuh in einer solchen Ebene steht. Die Abstandssensoren 20 befinden sich vorzugsweise in einem vorderen Bereich und ermitteln die Umgebung in einem Bereich vor dem Schuh.

Optional kann noch ein Beschleunigungssensor 22 in dem Schuh, vorzugsweise in der Sensoreinheit 2 angeordnet sein.

Der Lagesensor 21 erkennt die Lage des Schuhs (und somit der Abstandssensoren 20) in Bezug auf das durch die Schwerkraft gegebene Inertialsystem, mit dem Beschleunigungssensor 22 kann unter anderem auch die Bewegungsrichtung gemessen werden. Der Raum vor dem Schuh wird somit aus unterschiedlichen bekannten Richtungen abgetastet und kann als mehrdimensionales Muster (virtuelles Bild) errechnet werden. Bei einer vorteilhaften Ausführungsform ist es dabei auch möglich, Relativgeschwindigkeiten von bewegten Objekten zu erkennen, indem übliche Radarverfahren Einsatz finden.

Bei dem oder den Abstandssensoren kann es sich beispielsweise um Ultraschallsensoren, optische Sensoren oder um Radarsensoren, etc. oder bei mehreren Abstandssensoren können auch zwei oder mehreren Arten von Sensoren zum Einsatz kommen.

Die aufgenommenen Informationen werden sodann durch eine drahtlose oder leitungsgeführte Übertragung an eine Zentraleinheit, d.h. eine Auswerteeinheit 3 der Vorrichtung 1 weitergegeben, welche Auswerteeinheit 3 von dem Benutzer z.B. am Körper getragen wird.

Figur 1 zeigt schematisch weiters noch eine Feedback-Einheit 5, auf welche weiter unten noch eingegangen wird.

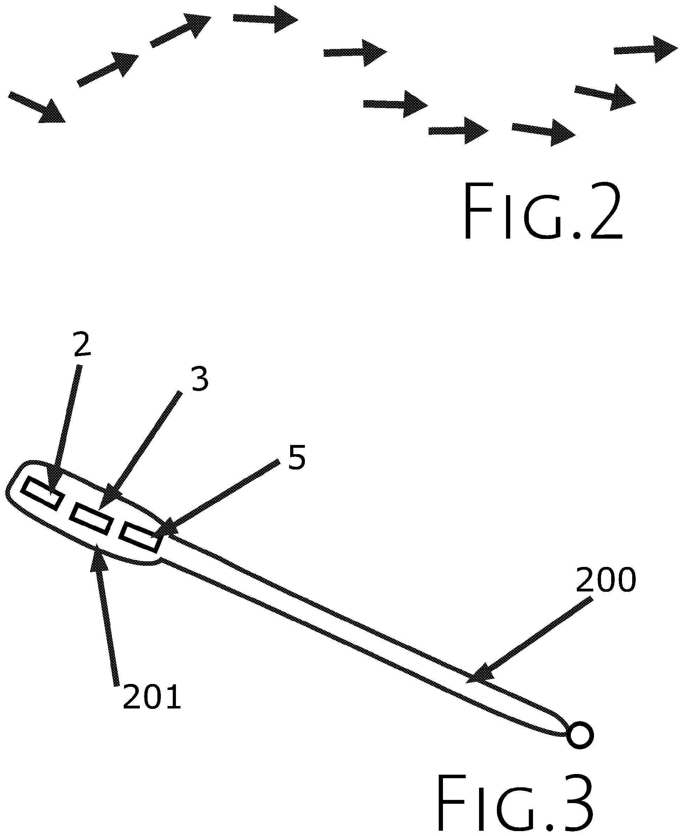

Figur 2 zeigt beispielhaft den Verlauf des Richtungsvektors, d.h. die sich ändernde Lage Abstandssensoren während einer Messung, d.h. während sich ein Benutzer bewegt.

Figur 3 zeigt einen Stock, z.B. einen Taststock 200 mit einem Griffstück 201. Die Vorrichtung, also zumindest die Sensoreinheit 2 mit Abstandssensoren 20, vorzugsweise auch mit Lagesensor 21 und/oder Beschleunigungssensor 22 ist in den Stock 200 oder in das Griffstück 201 eingebaut. Vorzugsweise sind auch Auswerteinheit 3 und z.B. auch die Feedback-Einheit 5 in den Stock 200 bzw. in das Griffstück 201 eingebaut.

Die Feedback-Einheit 5 umfasst beispielsweise einen Vibrationsgeber. Der Stock 200 gemäß Figur 3 hat nun zwei Betriebsmodi: Erstens kann er als Zeigestab verwendet werden, der die Richtung vorgibt, in die die Rückmeldung an den Nutzer erfolgt. Die Messung der Raumrichtung erfolgt dabei über den Lagesensor 21. Zweitens ist der Taststock als einfaches Feedbacksystem geeignet, mit dem durch die Stärke und die Frequenz der Vibration der Abstand zu Hindernissen in genau der angezeigten Raumrichtung angegeben wird.

Weiters kann der Lagesensor 21 eine unerwünschte Positionseinnahme des Benutzers detektieren und so bei einem etwaigen Sturz und unveränderter Lageänderung als Grundlage z.B. für einen Alarm verwendet werden.

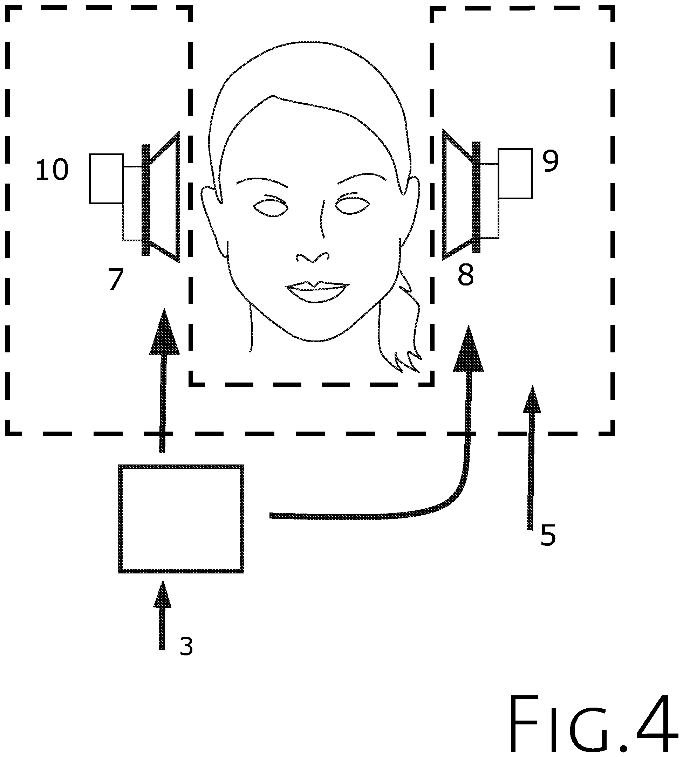

Eine vorteilhafte und komfortable Rückmeldung der ermittelten Umgebung ist in Figur 4 dargestellt. Figur 4 zeigt eine Feedback-Einheit 5, bestehend aus einem nicht dargestellten, bzw. in die Auswerteeinheit integrierten oder von dieser realisieren Feedback-Erzeugungseinheit sowie mit dieser verbundenen zwei akustischen Wandlern 7, 8 sowie über Aktoren, etwa Lautsprechern 9, 10, welche die Darstellung der Umgebung dem Nutzer über akustische Signale darstellen. Diese Rückmeldung über die Umgebung besteht einerseits aus akustischen Signalen, die über Variation der Lautstärke, der Tonhöhe bzw. eines zugefügten Halleffektes die Umgebung akustisch so darstellen, dass ein möglichst räumliches Abbild von dieser entsteht.

Es kann somit ein "Abbild" der für einen Benutzer relevanten Umgebung ermittelt und dem für den Benutzer bereitgestellt werden und weiters kann das Vorhandensein oder Auftauchen von Hindernissen, etwa Vertiefungen, Erhebungen, etc. detektiert werden.

Weiters können Ausnahmesituationen, wie ein Sturz oder eine nicht zulässige Position erkannt werden.

Bezüglich der Abstandssensoren soll im Folgenden noch auf eine beispielhafte Realisierung eingegangen werden. Aus der Automobilelektronik sind akustische Abstandswarnsysteme bekannt, die mit Hilfe der Reflexion eines Ultraschall- oder eines optischen Signals und der Messung der Laufzeit eine Distanzmessung durchzuführen imstande sind. Durch Anordnung von mehreren Sensoren in einer Achse oder durch Anordnung in einer Ebene ist durch Anwendung eines korrelativen Messverfahrens eine Erkennung der Richtung in der Ebene bzw. im Raum möglich. Dabei sind unterschiedliche Ausführungsformen mit jeweils einem oder mehreren Sendern und einem oder mehreren Empfängern denkbar.

Generell, unabhängig von der Art des jeweiligen Abstandssensors, besteht ein Abstandssensor aus zumindest einem Sender und einem Empfänger. Der Sender emittiert ein Signal, z.B. ein Ultraschall-Abstandssensor ein Ultraschallsignal, dieses Signal wird reflektiert und vom Empfänger empfangen. Sender und Empfänger können getrennt ausgebildet sein, es kann aber auch vorgesehen sein, dass Sender und Empfänger eine Baueinheit bilden. Typischerweise umfasst ein Abstandssensor einen Sender und einen Empfänger, es können aber auch zwei oder mehr Sender und/oder zwei oder mehr Empfänger vorgesehen sein.

Die Abstandssensoren, beispielsweise jene in einem Schuh, sollen vorzugsweise auch dazu dienen, vor einem Gefälle wie etwa Stiegen zu warnen. Durch eine übliche Schrittbewegung kann eine Messung mit den Abstandssensoren allerdings nicht in jeder Lage erfolgen, da wie, dies aus Figur 2 gut zu erkennen ist, in bestimmten Lagen des Schuhs der Boden als Hindernis detektiert werden würde. Abgeholfen werden kann diesem Problem, indem die Abstandssensoren, wie dies eingangs im allgemeinen Zusammenhang mit dieser Erfindung beschrieben wurde, die Abstandssensoren nur abhängig von der Lage messen, oder nur Abstandsdaten verwendet werden, wenn die Abstandssensoren eine gewisse Lage einnehmen.

Z.B. kann die Vorrichtung eingestellt, z.B. programmiert sein, dass eine Abfrage der Abstandssensordaten immer nur dann erfolgt, wenn sich der Schuh in einer waagrechten Position befindet. Es kann aber auch vorgesehen sein, dass wie weiter oben beschrieben auch von der Waagrechten abweichende Lagen bei den Messungen mit berücksichtigt werden, erkennen zu können, ob sich "kein" Boden vor dem Schuh, und somit z.B. eine Vertiefung, Stufe etc. befindet.

Als zusätzliche Hilfe und Analyse kann noch wie oben der beigeschaltete Beschleunigungssensor verwendet werden.

Meldet das Abstandsmesssystem nun in einer definierten, z.B. waagrechten Lage ein Hindernis, so wird z.B. ein akustisches (Ticken, etc.), haptisches und/oder optisches Feedback und/oder ein neurostimulierendes Feedback und/oder ein Stromimpuls ausgegeben, und/oder es erfolgt eine Sprachausgabe.

Das Feedback kann direkt an einem Gehäuse, in welches die Vorrichtung oder Teile davon untergebracht sind, ausgegeben werden oder durch ein Funkmodul, wie beispielsweise ein Bluetooth-Funkmodul, an ein externes Modul weitergeleitet werden. Dieses Modul hat der Anwender an/bei sich, vom dem aus ein Headset (Figur 4), Halskrause oder ähnliche akustische/haptische Ausgangsmedien, angeschlossen oder durch Funk kommunizieren können.

Bei der vorliegenden Erfindung kann generell die Raumrichtung von Hindernissen auch nicht nur allein aus der Laufzeit- und Phasenbeziehung von Echosignale sondern auch durch einen Lagesensor und/oder Beschleunigungssensor ermittelt werden.

In der Ausführung gemäß Figur 3 enthält der Blindenstock oder ein Griffstück ohne Taststock eine Lage- und Beschleunigungssensorik. Diese Sensorik detektiert die Lage des Griffstücks oder des Taststockes und meldet diese Raumrichtung an die Recheneinheit weiter. Das Vorhandensein von Hindernissen oder die Entfernung zu diesen Hindernissen in genau dieser durch die Lage des Griffs angezeigten Richtung wird dann durch haptische, akustische oder optische Signale an den Nutzer rückgemeldet.

Die Rückmeldung selbst erfolgt in der Vorrichtung im Griffstück selbst durch Vibration, wobei die Frequenz und die Abfolge der Vibration Lage, Entfernung und Art (also hartes Hindernis oder fließender Übergang) anzeigt.

Zum Gesamtbild der Umgebung trägt das akustische Feedbacksystem bei, das via Ausgangsmedium wie beispielsweise Ohrhörer oder in einem Kleidungsstück, also z.B. in einer Halskrause eingebaute Lautsprecher, durch Echo und Halleffekte Erhöhungen bzw. Vertiefungen im Bereich der Gehrichtung vermittelt. Denkbar sind auch Sprachausgaben als Feedback.

Hört also der Anwender im Stereo-Audiosystem linksseitig einen starken Halleffekt, so kann er so auf eine Vertiefung hingewiesen werden, ein hartes Echo zeigt z.B. eine Erhöhung an, die Lautstärke kann dabei repräsentativ der Entfernung gewählt werden.

Erfindungsgemäß werden Warnsignale synthetisiert (z.B. Ticken), wenn geringe Umgebungsgeräusche vorhanden sind aber dennoch eine Warnung erforderlich ist.

In der Vorrichtung werden auch Sensoren auffindbar, die die Umgebungsgeräusche aufnehmen und analysieren (messen), sodass das System die Lautstärke des akustischen Feedbacks anpasst. Eine Lösung wäre demnach beispielsweise, bei Vorliegen natürlicher Geräusche, also Verkehrslärm, etc. können Geräusche verarbeitet und mit Hall bzw. Echo überlagert werden, um eine Störung durch Zusatzgeräusche zu vermeiden.

Der Lagesensor z.B. in den Schuhen ist weiter geeignet, durch Erkennung von abnormalen Zuständen Hilferufe zu initiieren und so z.B. bei Ohnmachtsanfällen, Stürzen etc. via geeignetem Funk wie Mobilfunk, GPS, etc. Hilfe zu rufen.

Die Spannungsversorgung kann z.B. mittels Induktionstechnologie erfolgen.

Es wäre auch eine mechanische Spannungsversorgung denkbar, wobei sich der Akku durch die Gehbewegung auflädt.

Unter Lagesensoren sind in der vorliegenden Anmeldung Lagesensoren zu verstehen, wie sie beispielsweise in modernen Mobiltelefonen, Smartphones etc. bereits zum Einsatz kommen. Mit solchen Lagesensoren lassen sich alle im Rahmen der Figurenbeschreibung erörterten Ausführungen realisieren. Ein solcher Lagesensor misst z.B. eine, zwei oder drei der Weltkoordinaten (x, y, z).

Unter Lagesensor ist in der vorliegenden Anmeldung weiters aber auch noch eine Anordnung zu verstehen, bei welcher der Lagesensor zumindest einen, vorzugsweise zwei oder mehrere Gewichtssensoren umfasst:
- In dem beispielhaften Fall, dass der Lagesensor genau einen Gewichtssensor umfasst bzw. ein Gewichtssensor ist, kann - bei z.B. in einen Schuh oder in einen Stock eingebautem Gewichtssensor - gemessen werden, ob sich der Schuh oder Stock am Boden befindet und entsprechend mit einem Gewicht belastet ist. In dem Fall, dass der Schuh/Stock den Boden berührt, misst der zumindest eine Abstandssensor bzw. wird seine Messung berücksichtigt. Ist der Schuh oder Stock angehoben, so lastet kein Gewicht auf dem Schuh/Stock, der zumindest eine Abstandssensor misst nicht bzw. wird seine Messung in diesem Fall nicht berücksichtigt, sondern erst wieder, wenn der Gewichtssensor eine Gewichtsbelastung misst. In diesem Beispiel ist die definierte Lage des zumindest einen Abstandssensors durch ein Berühren/Aufliegen des Schuhs oder Stockes auf dem Boden definiert.
- Der beispielhafte Fall, dass der Lagesensor zumindest zwei oder genau zwei Gewichtssensoren umfasst bzw. durch (zumindest) zwei Gewichtssensoren gebildet ist, eignet sich besonders für einen Schuh. Ein Gewichtssensor kann z.B. in einem vorderen Bereich, etwa im Bereich der Zehen eingebaut werden, ein zweiter Gewichtssensor in einem hinteren Bereich, z.B. im Bereich der Ferse. Auf diese Weise kann nun einerseits ermittelt werden, ob der Schuh vollständig am Boden aufliegt (beide Gewichtssensoren messen eine Gewichtsbelastung), der Schuh vollständig abgehoben ist, oder der Schuh nur auf den Zehen oder nur auf der Ferse steht. Entsprechend kann auch die Richtung der Neigung des Schuhs ermittelt werden (nach unten geneigt, nach oben geneigt, waagrecht), und dies kann entsprechend bei der Auswertung des zumindest einen Abstandssensors (oder seiner Messung, d.h. ob er zu einem bestimmten Zeitpunkt misst oder nicht) berücksichtigt werden.

Die Verwendung von Lagesensoren im eigentlichen Sinne, wie sie in Mobiltelefonen etc. verbaut werden, hat den Vorteil, dass die Lage des zumindest einen Abstandssensors und allfällig anderer Bauteil, insbesondere eine Neigung zu einer Horizontalen relativ exakt gemessen werden kann.

Die Verwendung von Lagesensoren, welche aus einem oder mehreren Gewichtssensoren bestehen, hat den Vorteil, dass diese einfach in der Handhabung (bezüglich Winkelmessungen- und Rechnungen) und in der Softwarerealisierung sind.

Bei den Gewichtssensoren kann es sich z.B. um Drucksensoren oder kapazitive Sensoren, insbesondere um kapazitive Drucksensoren handeln.

Neben den oben beschriebenen Anwendungen in Schuh oder Stock ist allgemein mit den Gewichtssensoren, wie den beschriebenen Drucksensoren, kapazitiven Sensoren bzw. kapazitiven Drucksensoren eine Fuß-/ Kopf-/ Hände-Druck und Auflageerkennung möglich.

Grundsätzlich kann vorgesehen sein, dass lediglich eine Art von Lagesensoren (Lagesensor im eigentlichen Sinn oder zumindest ein Gewichtssensor) verwendet wird. Es kann aber auch vorgesehen sein, dass beide Arten von Gewichtssensoren verwendet werden.

## Patentansprüche

1. Vorrichtung (1) zur Detektierung einer Umgebung, wobei die Vorrichtung (1) umfasst:
- zumindest eine Sensoreinheit (2), sowie
- zumindest eine Auswerteeinheit (3),
wobei die Sensoreinheit (2) zumindest einen Abstandssensor (20) umfasst und die Auswerteeinheit (3) anhand der mit dem zumindest einen Abstandssensor (20) ermittelten Abstandsdaten zumindest ein virtuelles Bild der von dem zumindest einen Abstandssensor (20) erfassten Umgebung erzeugt,
**dadurch gekennzeichnet, dass**
die Sensoreinheit (2) weiters zumindest einen Lagesensor (21) umfasst, mittels welchem Lagesensor (21) die räumliche Lage, d.h. zumindest die Neigung der zumindest einen Sensoreinheit (2) bzw. des zumindest einen Abstandssensors (20) zu einer Horizontalen bzw. Horizontalebene, ermittelbar ist, wobei sich definierte Lagen in einem Winkelbereich um die 0° Lage in Bezug auf eine Horizontale bzw. Horizontalebene befinden, beispielsweise einem Bereich von +/- 30° um die 0° Lage herum, wobei
o von dem zumindest einen Abstandssensor (20) Abstandsdaten nur erfasst werden, wenn der zumindest eine Lagesensor (21) eine der definierten Lagen des zumindest einen Abstandssensors (20) erfasst, oder
o Abstandsdaten des zumindest einen Abstandssensors (20) nur an die zumindest eine Auswerteeinheit (3) übermittelt werden, wenn der zumindest eine Lagesensor (21) eine definierte Lage des zumindest einen Abstandssensors (20) bzw. der Sensoreinheit (2) erfasst,
und die Auswerteeinheit (3) zumindest ein virtuelles Bild der von dem zumindest einen Abstandssensor (20) erfassten Umgebung anhand der Abstandsdaten, welche in einer definierten Lage des Abstandssensor (20) bzw. der Sensoreinheit (2) erfasst wurden, erzeugt.

2. Vorrichtung nach Anspruch 1, **dadurch gekennzeichnet, dass** sie weiters zumindest einen Beschleunigungssensor (22) umfasst, mittels welchem zumindest einen Beschleunigungssensor (22) Beschleunigungsdaten der zumindest einen Sensoreinheit (2) bzw. des zumindest einen Abstandssensors (20) und/oder des zumindest einen Lagesensors (21) ermittelbar sind.

3. Vorrichtung nach Anspruch 2, **dadurch gekennzeichnet, dass** der zumindest eine Lagesensor (21) ferner zur Erkennung der räumlichen Lage des zumindest einen Beschleunigungssensors (22) eingerichtet ist.

4. Vorrichtung nach Anspruch 2 oder 3, **dadurch gekennzeichnet, dass** die zumindest eine Auswerteeinheit (3) Abstandsdaten des zumindest einen Abstandssensors (20) nur berücksichtigt, wenn diese zu einem Zeitpunkt, an dem die Beschleunigung einen Wert ungleich Null aufweist, ermittelt wurden.

5. Vorrichtung nach einem der Ansprüche 2 bis 4, **dadurch gekennzeichnet, dass** der zumindest eine Abstandssensor (20) nur dann Abstandsdaten liefert oder die gemessenen Abstandsdaten nur dann von der Auswerteeinheit (3) berücksichtigt werden, wenn der zumindest eine Abstandssensor (20) sich in einer definierten Lage, insbesondere in einer definierten Lage in Bezug auf eine Horizontalebene befindet.

6. Vorrichtung nach einem der Ansprüche 1 bis 5, **dadurch gekennzeichnet, dass** die zumindest eine Sensoreinheit (2) zwei oder mehr Abstandssensoren (21) umfasst, welche vorzugsweise in einem Array angeordnet sind.

7. Vorrichtung nach einem der Ansprüche 1 bis 6, **dadurch gekennzeichnet, dass** die Vorrichtung (1) weiters zumindest eine Feedback-Einheit (5) umfasst, welche in Abhängigkeit von dem von der Auswerteeinheit (3) ermittelten, virtuellen Bild der Umgebung zumindest ein Feedback-Signal ausgibt, wobei es sich vorzugsweise bei dem zumindest einen Feedback-Signal um eines oder mehrere der folgenden Feedback-Signale handelt:
- akustisches Feedback-Signal;
- visuelles Feedback-Signal;
- haptisches Feedback-Signal, welches z.B. als Vibrationssignal bzw. als Vibration ausgegeben wird;
- neurostimulierendes Feedback;
- elektrische Stromimpulse,
wobei vorzugsweise ein Feedback-Signal, beispielsweise ein akustisches Feedback-Signal, als Mono-, Stereo- oder 3-D-Signal ausgegeben wird.

8. Vorrichtung nach Anspruch 7, **dadurch gekennzeichnet, dass** das Feedback-Signal hinsichtlich einer oder mehrerer der folgenden Größe zeitlich variiert oder sich zeitlich verschiedene Feedback-Signale in einer oder mehreren der folgenden Größen unterscheiden: Frequenz des Feedback-Signals, Amplitude des Feedback-Signals, Reinheit (Rauschen) des Feedback-Signals, Dauer des Feedback-Signals, Stärke des Feedback-Signals, Lautstärke des Feedback-Signals, Helligkeit des Feedback-Signals, und/oder das Feedback-Signal abhängig von der Distanz eines Hindernisses zu dem zumindest einen Abstandssensor, und/oder der Form, z.B. der Höhe, Tiefe, oder Breite eines Hindernisses, abhängt.

9. Vorrichtung nach Anspruch 7 oder8, **dadurch gekennzeichnet, dass** ein Feedback-Signal in Abhängigkeit von der ermittelten Beschleunigung variiert wird.

10. Vorrichtung nach einem der Ansprüche 1 bis 9, **dadurch gekennzeichnet, dass** der zumindest eine Abstandssensor mittels Schallwellen arbeitet, z.B. ein Ultraschallsensor ist, und/oder dass der zumindest eine Abstandssensor mittels elektromagnetischer Wellen arbeitet, z.B. ein Radarsensor ist oder Funkwellen verwendet, insbesondere Funkwellen im MHz-Bereich, oder z.B. im nicht sichtbaren Bereich des Wellenlängenspektrums oder im sichtbaren Bereich des Wellenlängenspektrums arbeitet.

11. Vorrichtung nach einem der Ansprüche 1 bis 10, **dadurch gekennzeichnet, dass** die zumindest eine Sensoreinheit (2) in einem Schuh integriert ist, wobei vorzugsweise die Sensoreinheit (2) in einem vorderen Bereich des Schuhs eingebaut ist.

12. Vorrichtung nach einem der Ansprüche 2 bis 10, **dadurch gekennzeichnet, dass** die zumindest eine Sensoreinheit (2) in einem Schuh integriert ist, wobei vorzugsweise die Sensoreinheit (2) in einem vorderen Bereich des Schuhs eingebaut ist, und wobei der zumindest eine Beschleunigungssensor (22) in den Schuh integriert ist.

13. Schuh mit einer Vorrichtung nach einem der Ansprüche 1 bis 12.

14. Vorrichtung nach einem der Ansprüche 1 bis 10, **dadurch gekennzeichnet, dass** zumindest ein Teil der Vorrichtung, vorzugsweise die gesamte Vorrichtung, in einen Stock, beispielsweise in einen Taststock, Gehstock, Blindenstock, oder in einen Teil eines solchen Stockes eingebaut ist, oder zumindest ein Teil der Vorrichtung oder die gesamte Vorrichtung in eine Kopfbedeckung, z.B. einen Helm, Kleidungsstücke, wie z.B. Brillen, Gürtel, etc., einer Prothese oder an einem Mobiltelefon anbringbar oder eingebaut ist.

15. Stock, insbesondere Gehstock oder Taststock, mit einer Vorrichtung nach einem der Ansprüche 1 bis 10.

16. Griff für einen Stock, insbesondere für einen Gehstock oder Taststock, mit einer Vorrichtung nach einem der Ansprüche 1 bis 10.

## Claims

1. A device (1) for detecting an environment, the device (1) comprising:
- at least one sensor unit (2), and
- at least one evaluation unit (3),
the sensor unit (2) comprising at least one distance sensor (20), and the evaluation unit (3) using the distance data determined with the at least one distance sensor (20) to generate at least one virtual image of the environment sensed by the at least one distance sensor (20),
**characterised in that**
the sensor unit (2) further comprises at least one position sensor (21) by means of which position sensor (21) the spatial position, i.e. at least the inclination of the at least one sensor unit (2) or of the at least one distance sensor (20) with respect to a horizontal or horizontal plane, can be determined, wherein defined positions are situated within an angle range around the 0° position in relation to a horizontal or horizontal plane, for example within a range of +/- 30° around the 0° position, wherein
o the at least one distance sensor (20) acquires distance data only when the at least one position sensor (21) senses one of the defined positions of the at least one distance sensor (20), or
o distance data of the at least one distance sensor (20) are transferred to the at least one evaluation unit (3) only if the at least one position sensor (21) senses a defined position of the at least one distance sensor (20) or of the sensor unit (2),
and the evaluation unit (3) generates at least one virtual image of the environment sensed by the at least one distance sensor (20), on the basis of the distance data which were acquired in a defined position of the distance sensor (20) or of the sensor unit (2).

2. The device according to Claim 1,
**characterised in that**
it further comprises at least one acceleration sensor (22) by means of which at least one acceleration sensor (22) acceleration data of the at least one sensor unit (2) or of the at least one distance sensor (20) and/or of the at least one position sensor (21) can be determined.

3. The device according to Claim 2,
**characterised in that**
the at least one position sensor (21) is further designed to detect the spatial position of the at least one acceleration sensor (22).

4. The device according to Claim 2 or 3,
**characterised in that**
the at least one evaluation unit (3) takes into account distance data of the at least one distance sensor (20) only if said data were determined at a point in time at which the acceleration has a value which is not equal to zero.

5. The device according to any one of Claims 2 to 4,
**characterised in that**
the at least one distance sensor (20) only delivers distance data, or the measured distance data are only taken into account by the evaluation unit (3), if the at least one distance sensor (20) is in a defined position, in particular in a defined position in relation to a horizontal plane.

6. The device according to any one of Claims 1 to 5,
**characterised in that**
the at least one sensor unit (2) comprises two or more distance sensors (21) which are preferably arranged in an array.

7. The device according to any one of Claims 1 to 6,
**characterised in that**
the device (1) further comprises at least one feedback unit (5) which emits at least one feedback signal depending on the virtual image of the environment determined by the evaluation unit (3), wherein the at least one feedback signal is preferably one or more of the following feedback signals:
- audible feedback signal;
- visual feedback signal;
- haptic feedback signal which is emitted e.g. as a vibration signal or vibration;
- neurostimulatory feedback;
- electrical current pulses;
wherein a feedback signal, for example an audible feedback signal, is preferably emitted as a mono, stereo or 3D signal.

8. The device according to Claim 7,
**characterised in that**
the feedback signal varies over time in one or more of the following variables, or chronologically different feedback signals differ in one or more of the following variables: frequency of the feedback signal, amplitude of the feedback signal, purity (noise) of the feedback signal, duration of the feedback signal, intensity of the feedback signal, volume of the feedback signal, brightness of the feedback signal, and/or the feedback signal depends on the distance of an obstacle from the at least one distance sensor and/or on the shape, e.g. the height, depth or width of an obstacle.

9. The device according to Claim 7 or 8,
**characterised in that**
a feedback signal is varied depending on the determined acceleration.

10. The device according to any one of Claims 1 to 9,
**characterised in that**
the at least one distance sensor operates by means of sound waves, e.g. is an ultrasonic sensor, and/or the at least one distance sensor operates by means of electromagnetic waves, e.g. is a radar sensor or uses radio waves, in particular radio waves in the MHz range, or operates e.g. in the non-visible range of the wavelength spectrum or in the visible range of the wavelength spectrum.

11. The device according to any one of Claims 1 to 10,
**characterised in that**
the at least one sensor unit (2) is integrated in a shoe, wherein the sensor unit (2) is preferably installed in a front region of the shoe.

12. The device according to any one of Claims 2 to 10,
**characterised in that**
the at least one sensor unit (2) is integrated in a shoe, wherein the sensor unit (2) is preferably installed in a front region of the shoe, and wherein the at least one acceleration sensor (22) is integrated in the shoe.

13. A shoe having a device according to any one of Claims 1 to 12.

14. The device according to any one of Claims 1 to 10,
**characterised in that**
at least a part of the device, preferably the entire device, is installed in a cane, for example in a mobility cane, walking cane, blind person's cane, or in a part of such a cane, or at least a part of the device or the entire device can be attached to or is installed in a head covering, e.g. a helmet, articles of clothing, e.g. spectacles, belt etc., a prosthesis or a mobile telephone.

15. A cane, in particular a walking cane or mobility cane, having a device according to any one of Claims 1 to 10.

16. A handle for a cane, in particular for a walking cane or mobility cane, having a device according to any one of Claims 1 to 10.

## Revendications

1. Dispositif (1) pour la détection d'un environnement, le dispositif (1) comportant :
- au moins une unité capteur (2), ainsi que
- au moins une unité d'évaluation (3),
dans lequel l'unité capteur (2) comporte au moins un capteur de distance (20) et l'unité d'évaluation (3) génère au moins une image virtuelle de l'environnement détecté par ledit au moins un capteur de distance (20) sur la base des données de distance déterminées par ledit au moins un capteur de distance (20),
**caractérisé par le fait que**
l'unité capteur (2) comporte en outre au moins un capteur de position (21) au moyen duquel capteur de position (21) la position spatiale, à savoir au moins l'inclinaison, de ladite au moins une unité capteur (2) ou dudit au moins un capteur de distance (20) par rapport à l'horizontale ou à un plan horizontal est déterminable, des positions définies se trouvant dans une plage angulaire autour de la position 0° par rapport à l'horizontale ou à un plan horizontal, par exemple une plage de +/- 30° autour de la position 0°,
o des données de distance étant enregistrées par ledit au moins un capteur de distance (20) seulement lorsque ledit au moins un capteur de position (21) enregistre l'une des positions définies dudit au moins un capteur de distance (20), ou
o des données de distance dudit au moins un capteur de distance (20) étant transmises à ladite au moins une unité d'évaluation (3) seulement lorsque ledit au moins un capteur de position (21) enregistre une position définie dudit au moins un capteur de distance (20) ou de l'unité capteur (2),
et l'unité d'évaluation (3) générant au moins une image virtuelle de l'environnement détecté par ledit au moins un capteur de distance (20) sur la base des données de distance, lesquelles ont été enregistrées dans une position définie du capteur de distance (20) ou de l'unité capteur (2).

2. Dispositif selon la revendication 1, **caractérisé par le fait qu'**il comporte en outre au moins un capteur d'accélération (22), au moyen duquel au moins un capteur d'accélération (22) des données d'accélération de ladite au moins une unité capteur (2) ou dudit au moins un capteur de distance (20) et/ou dudit au moins un capteur de position (21) sont déterminables.

3. Dispositif selon la revendication 2, **caractérisé par le fait que** ledit au moins un capteur de position (21) est configuré également pour la détection de la position spatiale dudit au moins un capteur d'accélération (22).

4. Dispositif selon l'une des revendications 2 ou 3, **caractérisé par le fait que** ladite au moins une unité d'évaluation (3) prend en considération des données de distance dudit au moins un capteur de distance (20) seulement lorsque celles-ci ont été déterminées au niveau d'un moment auquel l'accélération présente une valeur non nulle.

5. Dispositif selon l'une des revendications 2 à 4, **caractérisé par le fait que** ledit au moins un capteur de distance (20) fournit des données de distance ou les données de distance mesurées sont prises en considération par l'unité d'évaluation (3) seulement lorsque ledit au moins un capteur de distance (20) se trouve dans une position définie, en particulier dans une position définie par rapport à un plan horizontal.

6. Dispositif selon l'une des revendications 1 à 5, **caractérisé par le fait que** ladite au moins une unité capteur (2) comporte au moins deux capteurs de distance (21), lesquels sont disposés de préférence dans un réseau.

7. Dispositif selon l'une des revendications 1 à 6, **caractérisé par le fait que** le dispositif (1) comporte en outre au moins une unité de rétroaction (5), laquelle émet au moins un signal de rétroaction en fonction de l'image virtuelle de l'environnement, déterminée par l'unité d'évaluation (3), où, de préférence, ledit au moins un signal de rétroaction est au moins l'un des signaux de rétroaction suivants :
- signal de rétroaction acoustique ;
- signal de rétroaction visuel ;
- signal de rétroaction haptique, lequel par exemple est émis en tant que signal de vibration ou en tant que vibration ;
- rétroaction neurostimulante ;
- impulsions de courant électrique,
où, de préférence, un signal de rétroaction, par exemple un signal de rétroaction acoustique, est émis en tant que signal mono, stéréo ou 3D.

8. Dispositif selon la revendication 7, **caractérisé par le fait que** le signal de rétroaction varie dans le temps en ce qui concerne une ou plusieurs des grandeurs suivantes ou des signaux de rétroaction différents dans le temps se différencient dans une ou plusieurs des grandeurs suivantes : fréquence du signal de rétroaction, amplitude du signal de rétroaction, pureté (bruit) du signal de rétroaction, durée du signal de rétroaction, intensité du signal de rétroaction, intensité sonore du signal de rétroaction, intensité lumineuse du signal de rétroaction, et/ou le signal de rétroaction dépend de la distance d'un obstacle par rapport audit au moins un capteur de distance, et/ou de la forme, par exemple de la hauteur, de la profondeur ou de la largeur d'un obstacle.

9. Dispositif selon l'une des revendications 7 ou 8, **caractérisé par le fait qu'**un signal de rétroaction varie en fonction de l'accélération déterminée.

10. Dispositif selon l'une des revendications 1 à 9, **caractérisé par le fait que** ledit au moins un capteur de distance travaille au moyen d'ondes sonores, par exemple est un capteur à ultrasons, et/ou **par le fait que** ledit au moins un capteur de distance travaille au moyen d'ondes électromagnétiques, par exemple est un capteur radar ou utilise des ondes radio, en particulier des ondes radio dans le domaine du MHz, ou par exemple dans le domaine non visible du spectre de longueurs d'onde ou dans le domaine visible du spectre de longueurs d'onde.

11. Dispositif selon l'une des revendications 1 à 10, **caractérisé par le fait que** ladite au moins une unité capteur (2) est intégrée dans une chaussure, où, de préférence, l'unité capteur (2) est intégrée dans une région avant de la chaussure.

12. Dispositif selon l'une des revendications 2 à 10, **caractérisé par le fait que** ladite au moins une unité capteur (2) est intégrée dans une chaussure, où, de préférence, l'unité capteur (2) est incorporée dans une région avant de la chaussure, et où ledit au moins un capteur d'accélération (22) est intégré dans la chaussure.

13. Chaussure comportant un dispositif selon l'une des revendications 1 à 12.

14. Dispositif selon l'une des revendications 1 à 10, **caractérisé par le fait qu'**au moins une partie du dispositif, de préférence, tout le dispositif, est incorporé dans un bâton, par exemple dans une baguette, une canne de marche, une canne pour non-voyants, ou dans une partie d'un tel bâton, ou au moins une partie du dispositif ou tout le dispositif est apte à être fixé ou est incorporé dans un couvre-chef, par exemple un casque, des pièces d'habillement, comme par exemple des lunettes, une ceinture, etc., une prothèse ou sur un téléphone mobile.

15. Bâton, en particulier canne de marche ou baguette, comportant un dispositif selon l'une des revendications 1 à 10.

16. Poignée pour un bâton, en particulier pour une canne de marche ou une baguette, comportant un dispositif selon l'une des revendications 1 à 10.
